(19) Europäisches Patentamt
European Patent Office
Office européen des brevets

(11) EP 2 420 806 A1

(12) **EUROPEAN PATENT APPLICATION**

(43) Date of publication:
**22.02.2012 Bulletin 2012/08**

(51) Int Cl.:
*G01H 1/00* (2006.01)          *F03D 7/04* (2006.01)

(21) Application number: **10173525.6**

(22) Date of filing: **20.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Siemens Aktiengesellschaft 80333 München (DE)**

(72) Inventors:
• **Esbensen, Thomas 7400, Herning (DK)**
• **Laurberg, Hans 8000, Århus C (DK)**

(54) **Method and device for determining a phase value of a phase associated with an oscillatory tower movement of a tower of a wind turbine and method of operating a wind turbine**

(57)     Method of determining a phase value of a phase associated with an oscillatory tower movement of a tower of a wind turbine, device for determining a phase value of a phase associated with an oscillatory tower movement of a tower of a wind turbine, and method of operating a wind turbine

A method of determining a phase value of a phase associated with an oscillatory tower movement of a tower (102) of a wind turbine (100) comprising measuring a quantity representative of the oscillatory tower movement, and determining the phase value based on the measured quantity.

FIG 1

**Description**

Method of determining a phase value of a phase associated with an oscillatory tower movement of a tower of a wind turbine, device for determining a phase value of a phase associated with an oscillatory tower movement of a tower of a wind turbine, and method of operating a wind turbine

Field of invention

The invention relates to the field of wind turbines, and in particular to a method of determining a phase value of a phase associated with an oscillatory tower movement of a tower of a wind turbine, a device for determining a phase value of a phase associated with an oscillatory tower movement of a tower of a wind turbine, and a method of operating a wind turbine.

Art Background

In general, a wind turbine comprises a tower, a nacelle arranged on top of the tower, and a rotor comprising blades. During operation of the wind turbine, the tower may perform an oscillatory tower movement. Such an oscillatory tower movement may increase loads on the tower, whereby an efficiency of the wind turbine may decrease and/or tower components may show a preterm fatigue.

There are different approaches known to damp such oscillatory tower movements and to accordingly adapt an operational state of the wind turbine.

EP 2 146 093 A1 discloses a method of damping tower oscillations of a tower of a wind turbine by causing the tower to perform an oscillatory side-side tower movement being counter-phased to the actual oscillatory side-side tower movement. To this end, a control signal for causing the tower of the wind turbine to dampen the side-side tower movement is generated based on a measured tower acceleration and a tower measured frequency. From the measured tower acceleration and the measured tower frequency a value of an actual tower acceleration is calculated which in turn serves as basis for determining the control signal.

However, converting the measured tower acceleration value into the desired value of the side-side tower movement may require approximations increasing an inaccuracy of the damping of the tower oscillation. In particular, the method does not take into account that control changes of the control of the wind turbine may impact the oscillatory tower movement.

"Control strategies for operation of pitch-regulated turbines above cut-out wind speeds", H. Markou and T. J. Larsen, EWEC 2009, discloses that adapting a rotor speed of a rotor of a wind turbine results in a reduced fatigue of tower components. The adapting of the rotor speed is based on measuring a tower acceleration such that a pitch position of blades of the rotor and/or a torque of a generator of the wind turbine are controlled to decrease a thrust of the tower. The oscillatory tower movement is accordingly decreased, thereby increasing a lifetime of the tower components.

However, the described technique for damping the oscillatory tower movement may represent a complicated measure and may only show a poor damping level. In particular, the described technique does not take into account that control changes of the control of the wind turbine may impact the oscillatory tower movement.

Summary of the Invention

It may be an object of the invention to provide a method of determining a phase value of a phase associated with an oscillatory tower movement of a tower of a wind turbine, a device for determining a phase value of a phase associated with an oscillatory tower movement of a tower of a wind turbine, and a method of operating a wind turbine which may allow for an easy, accurate and efficient operating of the wind turbine.

In order to achieve the object defined above, a method of determining a phase value of a phase associated with an oscillatory tower movement of a tower of a wind turbine, a device for determining a phase value of a phase associated with an oscillatory tower movement of a tower of a wind turbine, and a method of operating a wind turbine according to the independent claims are provided.

According to an exemplary aspect of the invention, a method of determining a phase value of a phase associated with an oscillatory tower movement of a tower of a wind turbine is provided, wherein the method comprises measuring a quantity representative of the oscillatory tower movement, and determining the phase value based on the measured quantity.

According to another exemplary aspect of the invention, a device for determining a phase value of a phase associated with an oscillatory tower movement of a tower of a wind turbine is provided, wherein the device comprises a measuring unit configured for measuring a quantity representative of the oscillatory tower movement, and a determining unit configured for determining the phase value based on the determined quantity.

According to another exemplary aspect of the invention, a method of operating a wind turbine is provided, wherein the method comprises determining a phase value of a phase associated with an oscillatory tower movement of a tower of the wind turbine as described above, and operating the wind turbine based on the determined phase value.

According to another exemplary aspect of the invention, a program element is provided, which program element, when being executed by a processor, is configured to carry out or control a method of determining a phase value of a phase associated with an oscillatory tower movement of a tower of a wind turbine as described above.

According to another exemplary aspect of the invention, a computer-readable medium is provided, in which a computer program for determining a phase value of a phase associated with an oscillatory tower movement of a tower of a wind turbine is stored, which computer program, when being executed by a processor, is configured to carry out or control a method of determining a phase value of a phase associated with an oscillatory tower movement of a tower of a wind turbine as described above.

According to another exemplary aspect of the invention, a program element is provided, which program element, when being executed by a processor, is configured to carry out or control a method of operating a wind turbine as described above.

According to another exemplary aspect of the invention, a computer-readable medium is provided, in which a computer program for operating a wind turbine is stored, which computer program, when being executed by a processor, is configured to carry out or control a method of operating a wind turbine as described above.

In the context of the present application, the term "oscillatory tower movement" may particularly denote an oscillatory-in-time movement of a tower of a wind turbine, particularly a tower oscillation of the tower. In particular, the term may particularly denote a linear or translatory movement or motion of (particularly a point of) the tower in one or more directions. In particular, a projection of the oscillatory tower movement may show a complex trajectory in a plane transverse, particularly perpendicular, to a tower extension. In particular, a tower movement may result from a tilt or a bending of the tower in the one or the more directions. In particular, the tower movement may be a motion of (particularly the point of) the tower along one direction such as, for example, a forward-backward direction with respect to a wind flow direction or a side-side-direction being transverse, particularly perpendicular, to a wind flow direction. In particular, a forward-backward movement of the tower may represent a most dominant tower movement, thereby approximating the oscillatory tower movement. In particular, the oscillatory movement may also be directed along any other direction (s) in between the forward-backward direction and the side-side-direction.

In particular, an oscillatory tower movement may be associated with or may be characterized by a tower frequency, a (tower) phase, and a (tower) amplitude.

In particular, the tower frequency may correspond to a fundamental frequency of the oscillatory tower movement, however, the tower frequency may also represent any harmonic frequency or a superposition of the fundamental frequency and/or harmonic frequencies associated with the oscillatory tower movement.

In particular, the (tower) phase associated with the oscillatory tower movement may particularly denote a fundamental frequency period or phase angle of the tower movement. In particular, the phase may be associated with a position of the tower of the wind turbine in a cycle of the oscillatory tower movement and thus may provide information about the position of the tower of the wind turbine in the tower movement cycle.

In particular, the (tower) amplitude may be associated with a strength of the tower movement.

The term "quantity representative of the oscillatory tower movement" may particularly denote a tower position, a tower velocity, or a tower acceleration. In particular, the tower velocity may represent a first derivative of the tower position, and the tower acceleration may represent a first derivative of the tower velocity and a second derivative of the tower position.

In particular, the oscillatory tower movement whose phase may be determined may not be identical to the measured quantity. For example, the measured quantity may be a tower acceleration, and the tower movement whose phase may be determined may be an oscillatory tower position.

The term "operating the wind turbine" may particularly denote controlling an operational state of the wind turbine or initializing (particularly a change of) a control of the operational state of the wind turbine. In particular, operating the wind turbine may also denote controlling the wind turbine such that an actual or present state of the wind turbine may not change. In particular, the operating may comprise to not act to control of the wind turbine. In particular, operating the wind turbine may comprise changing at least one control signal for the wind turbine (for example a torque reference signal, a power reference signal, a pitch reference signal) particularly to maintain some constraints for another control signal.

The term "operational state" of the wind turbine may particularly denote a state of the wind turbine defined by at least one operational condition of the wind turbine. For example, an operational state of the wind turbine may be an idle state, a rotational state, a lubrication state, a down-regulation state, etc. In particular, an idle state may particularly denote a state in which the rotor of the wind turbine may be in a standby state or a shut-down state and thus the blades of the rotor may not rotate around a respective rotational axis of the rotor. In particular, a rotational state of the wind turbine may particularly denote a state in which the rotor of the wind turbine may be in the service, and thus the blades of the rotor may rotate around the rotational axis of the rotor. In particular, a down-regulation state may denote a state in which a rotor speed of the rotor and/or a power of the wind turbine may be reduced. In particular, a lubrication state of the wind turbine may denote a state in which a lubrication procedure of a component of the wind turbine (for example, bearings of a pitch system) may be performed particularly by changing a position of the component of the wind turbine (for example, by changing pitch angles of the blades of the rotor).

According to the exemplary aspects of the invention described above, an easy, accurate and efficient way of operating the wind turbine, particularly at least partially reducing or damping oscillatory tower movements, may be provided.

During an operation of the wind turbine a wind flow and/or a rotation of a rotor of the wind turbine may effect a force acting on the tower resulting in an oscillatory tower movement of the tower being characterized by a tower frequency and a phase. Additionally, changes of a control of the wind turbine may also generate forces acting on the tower and may affect the oscillatory tower movement or introduce an oscillatory tower movement. Such control changes may be, for example, control changes of pitch angles of the blades of the rotor, or control changes of a generator torque of the generator being rotatably connected with a rotor shaft or rotor hub of the rotor. The control changes may increase the oscillatory tower movement by acting in phase with the first mentioned force.

In turn, the forces acting on the tower and being associated with the oscillatory tower movement may result in loads on the tower in terms of stress of the tower. For example, stress of the tower may be associated with tower moments or tower torques. In particular, such stress of the tower may vary depending on a position on the tower.

Thus, the phase value associated with the phase of the oscillatory tower movement may represent a highly sensitive quantity and may provide information about the tower movement. Thus, the phase value may be usable during and for the operating of the wind turbine.

Basing the operating on a phase value of a phase associated with the tower movement may use a direct relationship between the measured quantity and thus the determined phase value and the operating without a need of complicated mathematical relationships between the measured quantity and the actual tower movement, thereby facilitating the operating and increasing the accuracy of the operating.

Further, the operating may be very efficiently performed, since knowledge about a fundamental characteristic of the tower movement may be used for the operating.

Accordingly, an improved operation of the wind turbine may be accomplished. In particular, effects of a preterm fatigue of components of the tower of the wind turbine resulting from the stress of the tower body may be significantly decreased by the improved operating the wind turbine.

Further, the operating may be accomplished for various kind of oscillatory tower movements such as an oscillatory forward-backward tower movement or an oscillatory side-side tower movement.

Next, further exemplary embodiments of the method of determining a phase value of a phase associated with the oscillatory tower movement of a tower of a wind turbine will be explained. However, these embodiments also apply to the respective device, the respective method of operating a wind turbine, the respective computer programs and the respective computer-readable media.

The measuring may comprise measuring the quantity using a sensing unit configured for sensing the quantity. In particular, an accelerometer may be configured for sensing the tower acceleration. In particular, a gyrometer may be configured for measuring the tower position. Any conventional measurement device configured for sensing the quantity, particularly the accelerometer or the gyrometer, may be easily implemented in the wind turbine without significant constructive modifications of the design of the wind turbine (if not yet being present), thereby simplifying a step of measuring the quantity.

In particular, the accelerometer or gyrometer may be arranged in or at the tower (particularly in a position adjacent to an upper ending portion of the tower), or on or at the nacelle of the wind turbine (particularly at a bottom position adjacent to the upper ending portion of the tower).

In particular, the quantity may be measured during a time period at several time steps. In particular, the measuring may be executed at discrete time points. Thus, the determining of the phase value may be based on the quantity measured at the discrete time points and thus may also be executed in a discrete way.

In particular, the method may comprise measuring a tower frequency associated with the oscillatory tower movement.

The determining may comprise applying a Fourier Transformation, particularly a Fast Fourier Transformation, on the measured quantity. In particular, a Fourier Transformation may allow for converting the quantity measured in a time domain into a frequency domain and thus deducing amplitude and phase coefficients associated with the oscillatory tower movement at different frequencies. In particular, the phase value may be determined as a phase value or an angle value associated with a frequency bin of the Fourier Transformation comprising a frequency value of the tower frequency, thus the Fourier Transformation of the measured quantity may be evaluated at the tower frequency.

The determining may comprise applying a Fourier Transformation based on a Görtzel algorithm on the measured quantity. Using a complex Infinite Impulse Response Filter may allow for a very accurate determination of the phase value of the phase associated with the oscillatory tower movement. In particular, the Görtzel algorithm evaluated quantity may be calculated at the tower frequency.

The determining may comprise applying a Fourier Transformation based on a modified Görtzel algorithm on the measured quantity, wherein the modified Görtzel algorithm may comprise a transfer function with poles within a unit circle. In particular, the unit circle may define input values of the transfer function of the modified Görtzel algorithm. Since the Görtzel algorithm may only be marginal stable for the measured quantity values and may require to be often recalculated, stabilization of the Görtzel algorithm may be achieved by transferring the poles of the transfer function associated with the modified Görtzel algorithm in the unit circle. In particular, coefficients of the modified Görtzel algorithm may represent coefficients of the Görtezl algorithm being transformed by multiplying them with a number between 0 and 1.

In particular, the Görtzel algorithm and the modified Görtzel algorithm may represent complex bandpass filters applied on the measured quantity. In particular, a complex bandpass filter may let only signal values at positive frequencies pass.

In particular, the Görtzel algorithm and the modified Görtzel algorithm may comprise a transfer function of first order. However, higher orders of the respective transfer functions of the Görtzel algorithm and the modified Görtzel algorithm may also be used for signal processing.

In particular, the Görtzel algorithm and the modified Görtzel algorithm may be evaluated for a particular number of quantity values of the quantity measured at discrete time steps, in order to approximate an infinite tower movement.

The determining may comprise determining a further phase value associated with the oscillatory tower movement at a frequency value of a tower frequency. In particular, the further phase value may be determined as a phase value or an angle value associated with a frequency bin of the modified Görtzel algorithm comprising the frequency value of the tower frequency, thus the modified Görtzel evaluated quantity may be calculated at the tower frequency.

The determining may comprise applying a Phase Locked Loop (PLL) on the measured quantity. Thus, a further measure for accurately determining the phase value of the phase associated with the oscillatory tower movement may be provided.

In particular, PLL based signal processing may be based on determining a phase value by determining a phase value difference between (particularly a phase value of a phase associated with) a tower movement determined in a prior step of the PPL and (particularly a phase value of a phase associated with) a measured tower movement (being partially superimposed by a noise signal).

The determining may comprise applying a bandpass filter on the measured quantity prior to signal processing. Thus, as a first step of signal processing prior to applying a Fourier Transformation or a PLL smoothing of the measured quantity may be executed. Thus, a reliability of the determination of the phase value may be significantly increased.

The determining may comprise applying a phase shift to the determined phase value and/or the determined further phase value. In particular, if at least one of the filters described above may lead to a phase shift of the determined (further) phase value, a compensation for this phase shift may be applied in order to obtain a corrected phase value. In particular, a phase shift of the determined (further) phase value may correspond to a phase shift in time of the determined (further) phase value. In particular, the applying of the phase shift may comprise adding an offset phase value (particularly a real number) to the determined phase value and/or the determined further phase value and applying a modulus operation on a sum of the determined phase value and/or the determined further phase value and the added offset phase value. The term "modulus operation" may particularly denote a mathematical operation in accordance with the modulus function or modulo function which may be used for finding a remainder of a division of one number by another number. In particular, a mathematical notation of the modulus operation may be "a mod n" with a denoting a divided and n a divisor. In particular, the applying of the phase shift may comprise multiplying signal values (which may particularly be complex numbers) derived based on the (Fast) Fourier Transformation, the Görtzel algorithm, or the modified Görtzel algorithm with a complex number. Thus, accuracy of the determination of the phase value may be further enhanced. The corrected phase value may correspond to the phase value to be determined based on the measured quantity.

In particular, the modified Görtzel algorithm may induce a phase-shift on the determined further phase value which may be corrected by or compensated by either multiplying signal values derived based on the modified Görtzel algorithm with a complex number or by adding an offset phase value, particularly a real number, to the determined further phase value and applying a modulus operation on a sum of the further determined phase value and the added offset phase value, in order to provide a corrected determined phase value.

In particular, in a case in which pre-filtering the measured quantity by applying the bandpass filter may lead to a phase-shift of the phase value of the tower movement, a phase shift may be applied to the determined (further) phase value. In particular, an offset phase value, particularly a real number, may be added to the determined (further) phase value and a modulus operation may be applied to the sum of the determined (further) phase value and the added offset value. In particular, signal values of the quantity which may be particularly signal processed with the (Fast) Fourier Transformation, the Görtzel or the modified Görtzel algorithm may be multiplied with a complex number.

In particular, an offset phase value may be added to the determined further phase value and a modulus operation may be applied to the sum of the determined further phase value and the added offset phase value which may compensate for phase shifts owing to applying the modified Görtzel algorithm and the band pass filter.

In particular, in a case in which the PPL may lead to a phase shift of the determined phase value, a phase shift may be applied on the determined phase value by adding an offset phase value to the determined phase value and applying a modulus operation on a sum of the determined phase value and the added offset phase value.

In particular, the determining of the phase value may comprise determining a phase value associated with the quantity representative of the oscillatory tower movement and converting the determined phase value into a phase value associated with the oscillatory tower movement particularly using mathematical procedures. In particular, a tower acceleration may be measured and a phase value associated with the tower acceleration may be determined. Thereupon, the determined phase value associated with the tower acceleration may be converted into the phase value associated with a tower position or tower velocity using mathematical relations between acceleration, velocity, and position. The operating of the wind turbine may be based on the phase value associated with the tower movement.

In particular, in a case of the tower movement comprising an exponential, sinusoidal or a cosinusoidal shape the phases of the tower position, the tower velocity and the tower acceleration may be easily converted into one another using relations that the tower acceleration may represent a first derivative of the tower velocity and may represent a second derivative of the tower position.

In particular, the determining may comprise determining an amplitude value of an amplitude associated with the oscillatory tower movement based on the measured quantity. In particular, the determining of the amplitude value may comprise applying a Fourier Transformation, particularly a Fast Fourier Transformation, a Görtzel algorithm, or a modified Görtzel algorithm, or a PLL on the measured quantity, as described above with reference to the phase value. Thus, the operating may be further improved, since a further characteristic of the tower movement may be used for the operating.

Next, further exemplary embodiments of the method of operating a wind turbine will be explained. However, these embodiments also apply to the respective method of and device for determining a phase value of a phase associated with an oscillatory tower movement of a tower of a wind turbine, the respective computer programs, and the respective computer-readable media.

The operating may comprise adapting an operational state of the wind turbine based on the determined phase value. Thus, based on knowledge of the determined phase value of the phase associated with the tower movement an operational state of the wind turbine may be accurately adapted. In particular, the determined phase value may represent an input signal for adapting the operational state of the wind turbine.

In particular, the adapting may comprise causing the tower to perform an oscillatory tower movement comprising the tower frequency and a phase value being counter phased to the determined phase value, in order to damp the actual tower movement. In particular, inducing such a counter phased oscillatory tower movement may be achieved by inducing a force on the tower along a counter direction (or counter directions) of the oscillatory tower movement particularly based on controlling an operational state of the wind turbine. In particular, in the latter case a force acting on the tower in counter phase with the force resulting in the tower movement may decrease an amplitude of the oscillatory tower movement. In particular, a force in phase with the force resulting in the tower movement may increase an amplitude of the oscillatory tower movement.

In particular, the operating comprises controlling a pitch angle of at least one blade of the rotor of the wind turbine, thereby causing a change of the thrust (and the torque) applied to the rotor and, accordingly, impacting an oscillatory forward-backward tower movement.

In particular, the operating comprises controlling a bearing lubrication of a pitch system for at least one blade of the rotor of the wind turbine, thereby causing a change of the thrust (and the torque) applied to the rotor and, accordingly, impacting an oscillatory forward-backward tower movement.

In particular, the operating comprises controlling a generator power or generator torque of the wind turbine, and accordingly impacting an oscillatory side-side tower movement. In addition, a change of the generator torque may also impact an oscillatory forward-backward tower movement.

The operating may comprise determining a timing for the adapting based on the determined phase value. In particular, prior to adapting the operational state of the wind turbine a tower position may be determined based on the determined phase value such that an optimal timing for initializing the adapting may be determined. Thus, increase of loads on the tower by changing the operational state at a "wrong" timing may be prevented. Thus, the oscillatory tower movements may be at least partially reduced or damped.

The operating may comprise detecting a change of an operational state of the wind turbine based on the determined phase value. In particular, a change of the operational state may increase or decrease the tower movement and thus change loads on the tower. Accordingly, a phase value of a phase associated with the tower movement may change in time. Thus, the phase value may represent a very sensitive and accurate quantity indicating modifications of the operational state of the wind turbine.

In particular, the term "change of an operational state of the wind turbine" may particularly denote a change of a control strategy for the wind turbine particularly by activating a new control strategy for the wind turbine particularly in terms of changing controller settings or set points. In particular, the change of the operational state may denote at least one of a down- or up-regulation of the wind turbine, a stop of the wind turbine, a change of the rotor speed of a rotor of the wind turbine, a change of a timing of a bearing lubrication of pitch bearings of the blades of the rotor, and a change of at least one control signal which may control, for example, a pitch of the blades of the rotor, torque of the generator, or a power of the generator.

In particular, the change of an operational state of the wind turbine may be caused by at least one of an operator of the wind turbine, for example, a wind turbine controller, a park controller of the wind turbine, (particularly failures of) components of the wind turbine, and environmental conditions such as a weather and a wind flow.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawing

Fig. 1 illustrates a perspective view of a wind turbine.

Fig. 2 illustrates a device for determining a phase value of a phase associated with an oscillatory forward-backward tower movement of the tower of the wind turbine of Fig. 1 according to an exemplary embodiment of the invention.

Fig. 3a illustrates time dependencies of measured tower accelerations.

Fig. 3b illustrates time dependencies of a phase associated with measured tower accelerations.

Fig. 4 illustrates a device for determining a phase value of a phase associated with an oscillatory forward-backward tower movement of the tower of the wind turbine in Fig. 1 according to another exemplary aspect of the invention.

Detailed Description

The illustration in the drawing is schematic. It is noted that in different figures, similar or identical elements are provided with the same reference signs or with reference signs which are different from the corresponding reference signs only within the first digit.

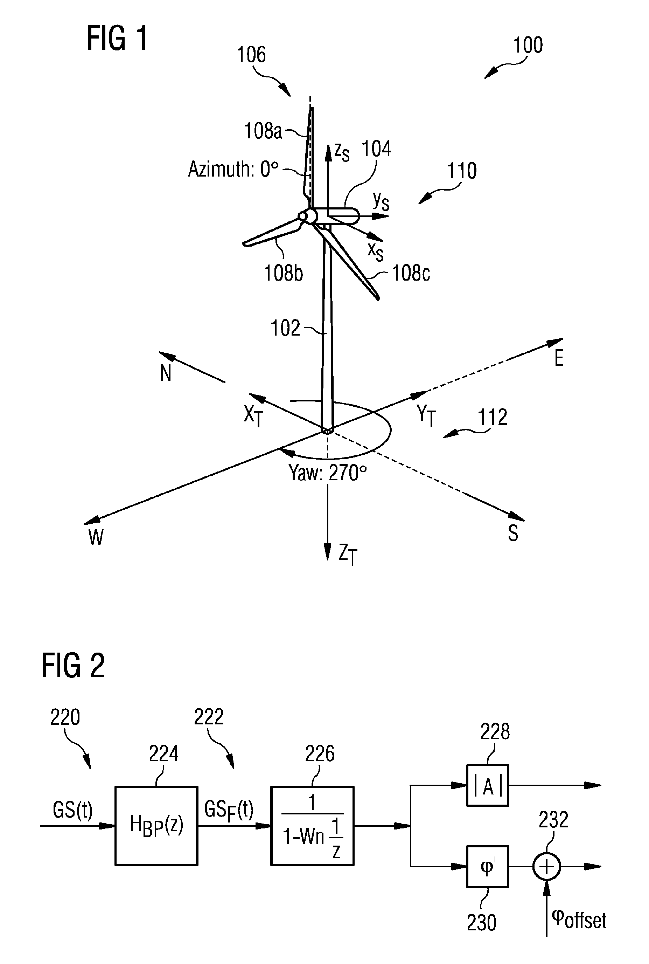

Referring to Fig. 1, a wind turbine 100 is illustrated. The wind turbine 100 comprises a tower 102 on which a nacelle 104 is mounted. A rotor 106 having three blades 108a-c arranged at a hub of the rotor 106 is mounted at a front portion of the nacelle 104. The hub of the rotor 106 is rotatively connected to a generator located in the nacelle 104 for example through a drive train (with or without a gearbox).

A coordination system 110 defined with respect to the nacelle 104 comprises three axes $x_s$, $y_s$, $z_s$. The $y_s$-axis runs along a longitudinal direction of the nacelle 104, the $x_s$-axis runs perpendicular to the $y_s$-axis and parallel to a plane in which the blades 108a-c of the rotor 106 extend, and the $z_s$-axis runs perpendicular to the $y_s$-axis and the $x_s$-axis. A further coordination system 112 defined with respect to the tower 102 comprises three axes $x_T$, $y_T$, $z_T$. The $z_T$-axis runs parallel to the longitudinal extension of the tower 102, and the $x_T$- and $y_T$-axes run in a plane perpendicular to the $z_T$-axis. In particular, the $y_T$-axis defines a direction of a wind flow. In the shown embodiment, the coordination systems 110, 112 coincide, however, the coordination system 110, 112 may differ from one another, for example, when considering the tower 102 showing a tilt along a particular direction.

For simplicity, it will be assumed in the following that the coordination systems 110, 112 may coincide, i.e. the tower 102 shows a small tilt value.

During operation of the wind turbine 100, the tower 102 of the wind turbine 100 may perform an oscillatory tower movement. In the shown embodiment, a most dominant tower movement is associated with a tower movement along a forward-backward direction being defined along the $y_s$-axis. Alternatively, the tower may show a tower movement along a side-side direction being defined along the $x_s$-axis. It may also be the case that the tower movement may be directed along any other direction(s) within the $x_s$-$y_s$-plane, thus the tower movement may result from a tilt of the tower. It is noted that the following description also applies to the other kind of oscillatory tower movements although referring to the forward-backward tower movement of the tower 102.

In particular, in a case in which the rotor speed of the rotor 106 may change, for example by modifying a torque and/or a power reference level of the generator caused by a control change, the side-side acceleration may be the suitable quantity for operating the wind turbine 100.

The tower movement in the $y_s$ direction may result in an increased load on the tower 102, thereby leading to a preterm fatigue of components of the tower 102. In order to damp these oscillatory tower movements, methods of and devices for damping an oscillatory tower movement of the tower 102 of the wind turbine 100 according to an exemplary embodiment of the invention will be explained in the following. However, the methods and devices are also usable for determining an amplitude value of an amplitude associated with the oscillatory tower movement to further enhance the damping of the oscillatory tower movements.

Referring to Fig. 2, a device for determining a phase value of a phase associated with a forward-backward tower movement of the tower 102 of the wind turbine 100 according to an exemplary embodiment of the invention will be explained.

The device 220 comprises an accelerometer placed on top of the tower 102 within the nacelle 104 and configured for measuring a tower acceleration *GS(t)* at equidistant time steps. Here, the variable "t" denotes the discrete sampling time points. The device 220 further comprises a determining unit 222 configured for determining the phase value of the phase associated with the tower movement based on the measured tower acceleration *GS(t)* .

The determining unit 222 comprises a bandpass filter 224, a modified Görtzel algorithm-unit 226, an amplitude determination unit 228, a phase determination unit 230 and a phase shifting unit 232. The bandpass filter unit 224 is configured for pre-filtering the measured tower acceleration values *GS(t)* and comprises a respective transfer function denoted by *H$_{BP}$(z)*. The pre-filtered tower acceleration *GS$_F$(t)* are inputted to the Görtzel algorithm-unit 226 configured for applying a modified Görtzel algorithm on the inputted tower acceleration *GS$_F$(t).* The applied modified Görtzel algorithm comprises a first order transfer function

$$H_{MG}(z) = \frac{1}{1 - W_n \dfrac{1}{z}}$$

with the transfer function having poles within a unit circle of input values z. Here, *W$_n$ = c \* exp( -2$\pi$i \* f \* t)* applies with c being a real number with **0<c<1.**

The outputted filter signal is inputted to the amplitude determination unit 228 and the phase determination unit 230 denoted in Fig. 2 by "|A|" and "$\varphi$'", respectively. The amplitude determination unit 228 is configured for determining a magnitude or absolute value of the tower acceleration value at the tower frequency and the phase determination unit 230 is configured for determining a phase value $\varphi'$ of a phase associated with the tower acceleration at the tower frequency. The phase shifting unit 232 is configured for shifting the determined phase *value* $\varphi'$ by adding an offset phase value denoted in Fig. 2 by "$\varphi_{offset}$" to the determined phase value and applying the modulus on a sum of the phase value and the offset value, in order to compensate for a phase shift of the phase value owing to the applied modified Görtzel algorithm and the applied bandpass filter. The offset phase value is a real number.

Alternatively to adding the phase offset value to the determined phase value and applying the modulus operation on the sum of the determined phase value and the added phase offset value, the signal values of the Görtzel algorithm evaluated quantity *GS$_F$(t)* may be multiplied by a complex number.

From a mathematical point of view, the Görtzel algorithm is based on the equation

$$GA(t) = W_a * GA(t-1) + GS(t)$$

with *t* denoting the measuring time point,
*W$_a$ = exp( -2$\pi$i\* t\* f)* denoting the filter coefficients, and *f* denoting a frequency.

The modified Görtzel algorithm is based on the sequence

$$GN(t) = W_n * GN(t-1) + GS(t)$$

with $W_n = c * exp( -2\pi i * f * t) = c * W_a$. Accordingly, the poles of the transfer function of the modified Görtzel algorithm are shifted into the unit circle.

The value c may represent a "forgetting rate" of the modified Görtzel algorithm. For comparison, the Görtzel algorithm comprises a forgetting rate of zero corresponding to $c=1$.

For convenience, the formulas of the modified Görtzel algorithm may be rewritten using a Finite Impulse Response Filter approximation

$$GN(t) = W_n * GN(t-1) + GS(t) =$$
$$= \sum_{k \subset (0,1,2,...,t)} (W_n)^{(t-k)} * GS(k) =$$
$$= \sum_{k \subset (0,1,2,...,t)} (W_a)^{(t-k)} * c^{(t-k)} * GS(k)$$

Thus, one may understand that $GN(t)$ may represent the filter coefficient at the frequency $f$ of $GS(t)$ using the sequence $c^{(t-k)}$ as a window function. The function $c^{(t-k)}$ represents an asymmetric function, thus giving rise to the phase shift of the determined phase value.

Instead of using the modified Görtzel algorithm, a conventional Görtzel algorithm may be applied to $GS(t)$ or $GS_F(t)$. Accordingly, only a correction of the determined phase value for a phase shift resulting from the band pass filter unit 224 may be required.

Further, instead of using the modified Görtzel algorithm, a Fourier Transformation may be applied to the measured tower acceleration GS(t). The phase value is determined in the frequency domain as a phase value of the phase associated with the tower movement at the tower frequency. The determining unit 220 may comprises the bandpass filter unit 224, a Fast Fourier Transformation unit, the amplitude determination unit 228, and the phase determination unit 230.

Further, instead of using the modified Görtzel algorithm, a Fast Fourier Transformation may be applied to the measured tower acceleration GS(t). The determination of the phase value is identical as described with respect to the Fourier Transformation.

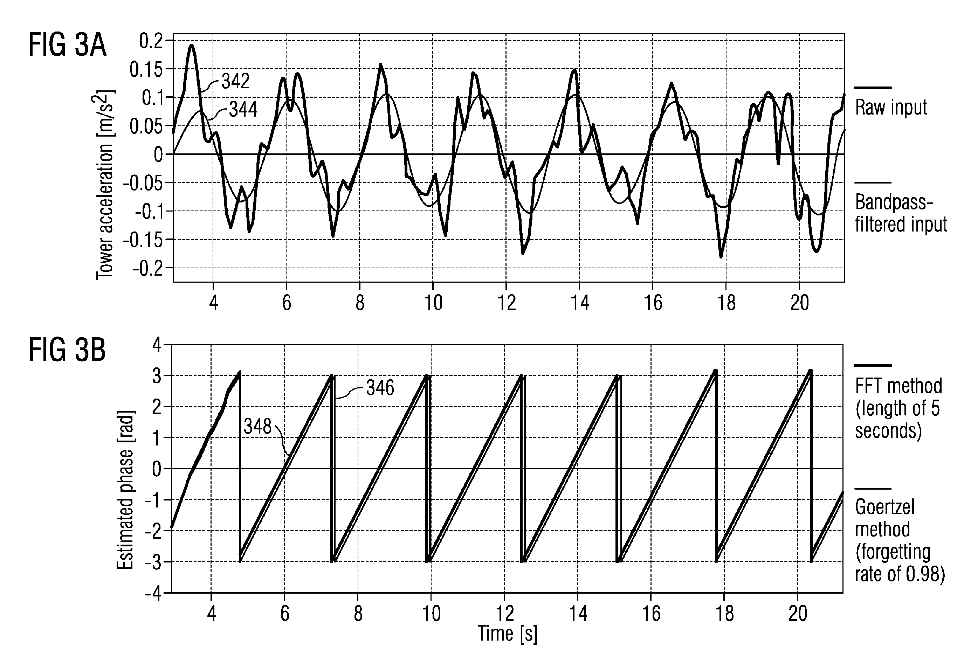

Referring to Fig. 3a, time dependencies of the tower acceleration are shown. For convenience, the tower acceleration is shown as time continuous functions, although being measured at discrete time points. A curve 342 represents the measured tower accelerations $GS(t)$ depending on the measuring time (point) $t$. The curve 342 comprises a shape of a cosines function on which a noise signal is superimposed. A curve 344 represents the pre-filtered tower acceleration $GS_F(t)$ depending on the measuring time (point) $t$. The curve 344 comprises a smoothened shape compared to the curve 342 such that the noise signal is reduced.

Referring to Fig. 3b, time dependencies of the determined phase values are shown. The determined phase values are also shown as time continuous functions, although being evaluated for the discrete measuring time points. A curve 346 represents the determined phase values based on the curve 342 with c=0.98. The curve 346 shows a sawtooth-like shape with a repetition period of approximately 2.8 seconds. It is noted that the modified Görtzel algorithm may adapt very well for changes in the determined phase values particularly in contrast to the Görtzel algorithm. For comparison, a curve 348 represents phase values using the Fast Fourier Transformation with a sampling length of 5 seconds. The curves 348, 346 almost coincide.

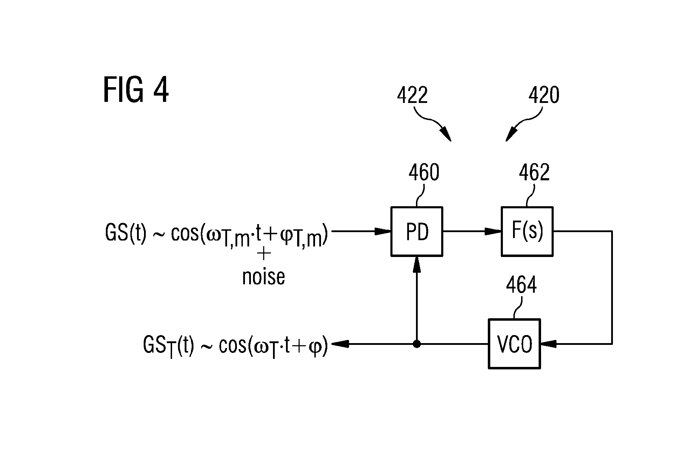

Referring to Fig. 4, a device 420 for determining a phase value of a phase associated with the tower acceleration of the tower 102 of the wind turbine 100 according to another exemplary embodiment is illustrated. The device 420 is based on a Phase Locked Loop (PLL) commonly used to estimate a maximum-likelihood estimation of a periodically shaped signal comprising noise.

The device 420 comprises an accelerometer and a determining unit 422 comprising a phase detector (PD) 460, a loop filter 462 denoted in Fig. 4 by F(s), and a voltage-controlled oscillator (VCO) 464. The measured tower acceleration $GS(t) \sim \cos(\omega_{T,m}t + \varphi_{T,m}) + noise$ is inputted to the phase detector 460. Here, $\omega_{T,m}$ denotes the angular tower frequency and $\varphi_{T,m}$ denotes the phase of the measured quantity. The phase detector 460 is configured for determining a phase value difference between a phase associated with the inputted, measured tower acceleration and a phase associated with an output signal of the VCO 464. The outputted phase difference is inputted to the loop filter 462 configured for smoothening the determined phase difference, in order to reduce the noise on the signal. The smoothened signal is inputted to the VCO 464 which is configured for modifying the PLL frequency to match the frequency of the signal with the frequency of the reference signal. An output of the VOC 464 represents the determined oscillatory tower acceleration being proportional to $GS(t) \sim \cos(\omega_T t + \varphi_T)$ with $\omega_T$ denoting the determined angular tower frequency and $\varphi_T$ denoting the determined phase. Accordingly, the PLL represents a control loop with a plant, namely the VCO 464, and a controller, namely the loop filter 462.

In the following, a method of operating the wind turbine 100 according to an exemplary aspect of the invention will be explained.

In a first step, the phase value of the phase associated with the tower movement is determined using methods and devices according to the exemplary embodiments described above with reference to Figs. 2-4. Thereupon, a change of an operational state of the wind turbine 100 based on the determined phase value is detected and/or an operational state of the wind turbine 100 based on the determined phase value is adapted.

The change of the operational state is associated with a control change of the wind turbine 100, for example, modifications of set points of the wind turbine controller, activation of a bearing lubrication, a power and/or speed down-regulation of the wind turbine 100, a stop of the wind turbine 100, a change of controller settings of the wind turbine 100 particularly induced by a park controller of a wind park comprising the wind turbine 100.

The adapting comprises, for example, shutting down the wind turbine 100, setting the wind turbine 100 in idle mode, or changing the rotor speed of the rotor 106 and/or a power reference of the generator of the wind turbine 100.

In order to optimize the adapting of the operational state of the wind turbine 100, a timing of the adapting is calculated based on the determined phase value. In order to decrease the tower movement, a tower position is calculated based on the determined phase value associated with the measured tower acceleration, and a force acting on the tower 102 is executed in counter phase with a force resulting from the tower movement. To this end, a new control strategy for the wind turbine 100 is initialized which generates the desired counter phased force acting on the tower 102. The control strategy comprises, for example, a down-regulation of the wind turbine 100, a lubrication procedure of bearings of a pitch system for the blades 108a-c of the rotor 106, etc. The adapting may have to be performed during the operation of the wind turbine 100, however, by determining the timing of the activation of the control strategy the optimum timing of the adapting may be estimated.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method of determining a phase value ($\varphi_T$) of a phase ($\varphi$) associated with an oscillatory tower movement of a tower (102) of a wind turbine (100), the method comprising

   - measuring a quantity ($GS(t)$) representative of the oscillatory tower movement, and
   - determining the phase value ($\varphi_T$) based on the measured quantity $(GS(t))$.

2. The method according to claim 1, wherein the measuring comprises measuring the quantity $(GS(t))$ using a sensing unit configured for sensing the quantity $(GS(t))$.

3. The method according to claim 1 or 2, wherein the determining comprises applying a Fourier Transformation, particularly a Fast Fourier transformation, on the measured quantity $(GS(t))$.

4. The method according to claim 1 or 2, wherein the determining comprises applying a Fourier Transformation based on a Görtzel algorithm on the measured quantity $(GS(t))$.

5. The method according to claim 4, wherein the determining comprises applying a Fourier transformation based on a modified Görtzel algorithm on the measured quantity $(\textbf{GS(t)})$, wherein the modified Görtzel algorithm comprises a transfer function $(\textbf{H}_{MG}(\textbf{z}))$ with poles within a unit circle.

6. The value according to claim 5, wherein the determining comprises determining a further phase value ($\varphi$') associated with the oscillatory tower movement at a frequency value of a tower frequency.

7. The method according to claim 1 or 2, wherein the determining comprises applying a Phase Locked Loop on the measured quantity $(\textbf{GS(t)})$.

8. The method according to anyone of claims 1 to 7, wherein the determining comprises applying a bandpass filter $(\textbf{H}_{BP}(\textbf{z}))$ on the measured quantity $(\textbf{GS(t)})$ prior to signal processing.

9. The method according to anyone of claims 1 to 8, wherein the determining comprises applying a phase shift $(CP_{offiet})$ to the determined phase value ($\varphi$) or the determined further phase value ($\varphi$').

10. A device (320, 420) for determining a phase value ($\varphi_T$) of a phase ($\varphi$) associated with an oscillatory tower movement of a tower (102) of a wind turbine (100), the method comprising

   - a measuring unit configured for measuring a quantity $(\textbf{GS(t)})$ representative of the oscillatory tower movement, and
   - a determining unit (322, 422) configured for determining the phase value ($\varphi_T$) based on the determined quantity $(\textbf{GS(t)})$.

11. A method of operating a wind turbine (100), the method comprising

   - determining a phase value ($\varphi_T$) of a phase ($\varphi$)associated with an oscillatory tower movement of a tower (102) of a wind turbine (100) according to anyone of claims 1 to 9,
   - operating the wind turbine (100) based on the determined phase value ($\varphi_T$).

12. The method according to claim 11, the operating comprises

   - adapting an operational state of the wind turbine (100) based on the determined phase value ($\varphi_T$).

13. The method according to claim 12, wherein the operating comprises determining a timing for the adapting based on the determined phase value ($\varphi_T$).

14. The method according to anyone of claims 11 to 13, the operating comprises

   - detecting a change of an operational state of the wind turbine (100) based on the determined phase value ($\varphi_T$).

## FIG 1

## FIG 2

**FIG 3A**

Raw input — 342

Bandpass-filtered input — 344

Tower acceleration [m/s2]

Time [s]

**FIG 3B**

FFT method (length of 5 seconds) — 346

Goerztel method (forgetting rate of 0.98) — 348

Estimated phase [rad]

Time [s]

FIG 4

422    420

460    462

$GS(t) \sim \cos(\omega_{T,m} \cdot t + \varphi_{T,m})$
$+$
noise

PD → F(s)

464

$GS_T(t) \sim \cos(\omega_T \cdot t + \varphi)$ ← VCO

Europäisches
Patentamt

European
Patent Office

Office européen
des brevets

# EUROPEAN SEARCH REPORT

Application Number

EP 10 17 3525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 816 347 A1 (FUJI HEAVY IND LTD [JP]) 8 August 2007 (2007-08-08) * paragraphs [0029] - [0046]; figures 1-4 * * paragraphs [0053] - [0057]; figures 6-7 * ----- | 1-14 | INV. G01H1/00 F03D7/04 |
| X | US 2009/266160 A1 (JEFFREY MIKE [US] ET AL) 29 October 2009 (2009-10-29) * paragraphs [0021] - [0024] * * paragraphs [0072] - [0088]; figure 2 * ----- | 1-14 | |
| X | US 5 140 856 A (LARSEN ORLA W [US]) 25 August 1992 (1992-08-25) * column 4, lines 15-47; figures 1-2 * * column 6, line 32 - column 7, line 31; figure 3 * * column 8, line 65 - column 9, line 24; figure 6 * ----- | 1-14 | |

| TECHNICAL FIELDS SEARCHED (IPC) |
|---|
| G01H F03D |

The present search report has been drawn up for all claims

| Place of search | Date of completion of the search | Examiner |
|---|---|---|
| Munich | 22 February 2011 | Trique, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 17 3525

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2011

| Patent document cited in search report | | Publication date | Patent family member(s) | | Publication date |
|---|---|---|---|---|---|
| EP 1816347 | A1 | 08-08-2007 | CN | 101012808 A | 08-08-2007 |
| | | | JP | 2007205225 A | 16-08-2007 |
| | | | US | 2007176428 A1 | 02-08-2007 |
| US 2009266160 | A1 | 29-10-2009 | WO | 2009129617 A1 | 29-10-2009 |
| US 5140856 | A | 25-08-1992 | AU | 9121791 A | 25-06-1992 |
| | | | WO | 9209871 A1 | 11-06-1992 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2146093 A1

**Non-patent literature cited in the description**

- **H. MARKOU ; T. J. LARSEN.** Control strategies for operation of pitch-regulated turbines above cut-out wind speeds. *EWEC 2009,* 2009